(19) Europäisches Patentamt
European Patent Office
Office européen des brevets

(11) Numéro de publication: **0 098 004**
**A1**

(12) # DEMANDE DE BREVET EUROPEEN

(21) Numéro de dépôt: 83200904.7

(22) Date de dépôt: 20.06.83

(51) Int. Cl.³: C 08 G 18/02
C 08 G 18/79

(30) Priorité: 29.06.82 LU 84238

(43) Date de publication de la demande:
11.01.84 Bulletin 84/2

(84) Etats contractants désignés:
BE CH DE FR GB IT LI NL

(71) Demandeur: SOCIETE CARBOCHIMIQUE en abrégé "CARBOCHIM"
avenue de la Renaissance 12
B-1040 Bruxelles(BE)

(72) Inventeur: Lambert, Pierre
Rue de la Citronnelle, 19A
B-1348 Louvain-la-Neuve(BE)

(72) Inventeur: de Aguirre-Otegui, Ignacio
Chemin des Maréchaux, 7
B-1350 Wavre-Limal(BE)

(74) Mandataire: De Brabanter, Maurice et al,
Bureau VANDER HAEGHEN 63 Avenue de la Toison d'Or
B-1060 Bruxelles(BE)

(54) **Nouveaux sels de polyisocyanates organiques et leur préparation.**

(57) L'invention concerne de nouveaux sels organiques de polyisocyanates contenant au moins un cycle isocyanurate à charge négative et au moins un ion non métallique à charge positive et leur préparation par réaction d'un cyanate d'onium (ammonium, phosphonium ou arsonium) ou d'un cyanate de polyonium quaternaire du type ionène avec un polyisocyanate organique ou une 1,3-bis(isocyanatoaryl)-urétidinedione.

EP 0 098 004 A1

Croydon Printing Company Ltd.

NOUVEAUX SELS DE POLYISOCYANATES ORGANIQUES ET LEUR PREPARATION

La présente invention concerne, à titre de nouveaux composés, des sels de polyisocyanates organiques contenant au moins un cycle isocyanurate porteur de charge négative et au moins un ion non métallique positif. En d'autres termes, l'invention concerne de nouveaux sels organiques de mono- ou polyisocyanurates contenant au moins deux fonctions isocyanates libres.

L'invention concerne également un procédé pour la préparation des nouveaux sels précités.

On connaît des polyisocyanurates moléculaires, contenant des fonctions isocyanates libres, que l'on prépare par réaction de trimérisation de polyisocyanates.

On connaît également des sels métalliques de polyisocyanates contenant des cycles isocyanurates ioniques. En particulier, le brevet américain U.S. 3.573.259 décrit la préparation de tels sels métalliques à partir de diisocyanates organiques et de cyanates alcalins ou alcalino-terreux, de préférence à des températures comprises entre 10 et 175°C.

Le procédé décrit dans ce brevet U.S. 3.573.259 a l'inconvénient de ne pouvoir être réalisé que dans les solvants aprotiques dont la constante diélectrique à 25°C est supérieure à 15; un autre inconvénient de ce procédé est qu'il n'est réalisé qu'en suspension.

En outre, ce procédé connu ne produit que des polymères de poids moléculaire inférieur à 2000; dans un exemple particulier, le produit obtenu à partir de

2,4 tolylènediisocyanate et de cyanate de sodium dans le diméthylformamide a un poids moléculaire inférieur à 1000.

On connaît également des monoisocyanurates métalliques ne contenant pas de fonctions isocyanates libres. En particulier, le brevet américain U.S. 3.625.964 décrit la préparation de sels métalliques de monoisocyanurates de formule A à partir de 1,3 diarylurétidinediones et de cyanates métalliques suivant la réaction :

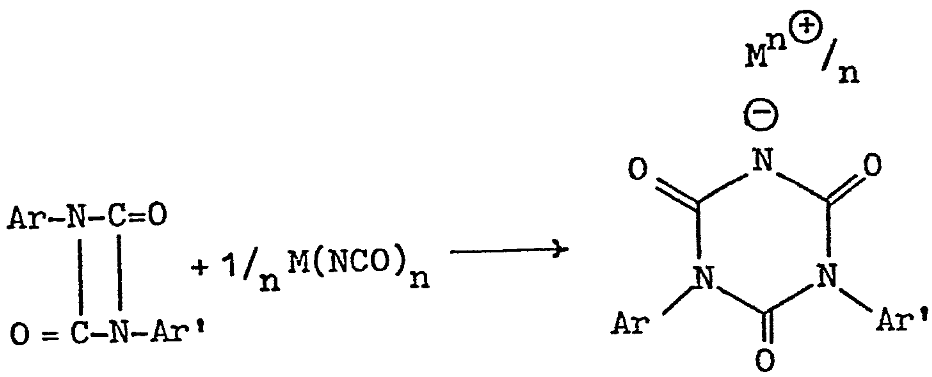


(A)

dans laquelle Ar et Ar' désignent des radicaux aromatiques pouvant porter des substituants nitro, méthoxy, méthyl, chloro, bromo ou iodo; M désigne un métal alcalin ou alcalino-terreux et n le nombre d'oxydation du métal. Ce procédé a l'inconvénient de ne pouvoir être réalisé que dans des solvants aprotiques dont la constante diélectrique à 25°C est supérieure à 15; un autre inconvénient est qu'il n'est réalisé qu'en suspension.

Ce procédé est par ailleurs limité à l'utilisation comme réactifs de départ des 1,3 diarylurétidinediones qui ne portent pas, comme substituants, de fonctions isocyanates libres pouvant interférer avec la réaction de base du procédé et réduire la sélectivité en composés de formule A.

La présente invention concerne, à titre de nouveaux composés, des sels organiques de polyisocyanates

contenant au moins un cycle isocyanurate à charge négative et au moins un ion non métallique à charge positive, ces nouveaux sels répondant à la formule générale (I) suivante :

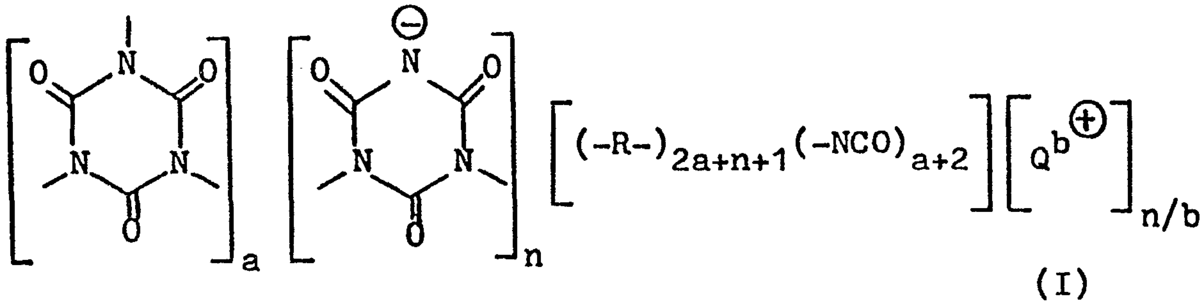

(I)

dans laquelle R est un radical bivalent aliphatique, cycloaliphatique, aromatique ou hétérocyclique éventuellement substitué, Q est un cation onium tétrasubstitué par quatre radicaux identiques ou différents pouvant être des radicaux aliphatiques, cycloaliphatiques, aromatiques ou hétérocycliques éventuellement substitués, a est le nombre moyen de cycles isocyanurates moléculaires qui peut être égal ou supérieur à zéro, b est le nombre d'hétéroatomes tétrasubstitués de Q qui est d'au moins 1 et n est le nombre moyen de cycles isocyanurates ioniques qui est d'au moins 1.

Dans les composés de formule (I) suivant l'invention, a peut, par exemple, atteindre une valeur d'environ 500, b est avantageusement égal à 1, mais peut atteindre une valeur d'environ 100 et n peut atteindre une valeur d'environ 3000.

Parmi les composés de formule (I), on peut citer les classes de nouveaux composés dans lesquels Q désigne

- soit un radical de formule :

$$(R^{I}\ R^{II}\ R^{III}\ X)_b\ R^{IV} \qquad (II)$$

dans laquelle X est de l'azote, du phosphore ou de l'arsenic, $R^{I}$, $R^{II}$, $R^{III}$ et $R^{IV}$ qui sont identiques ou différents

désignent des radicaux alcoyle, aryle ou arylalcoyle éventuellement substitués, $R^{I}$ et $R^{II}$ pouvant également former ensemble un radical bivalent éventuellement substitué et b a la signification donnée plus haut ;

- soit un radical de formule :

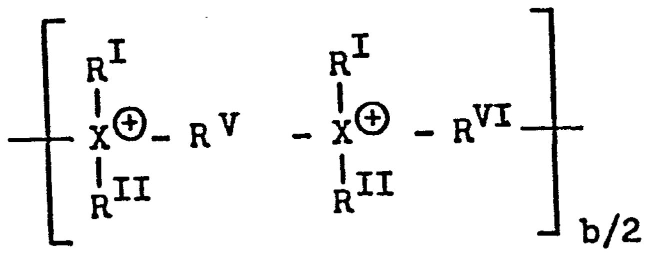

(III)

dans laquelle X, $R^{I}$ et $R^{II}$ ont les significations données ci-dessus, $R^{V}$ et $R^{VI}$ sont des radicaux bivalents et b a la signification donnée plus haut.

Ainsi, l'invention couvre les classes de composés représentés par les formules générales suivantes :

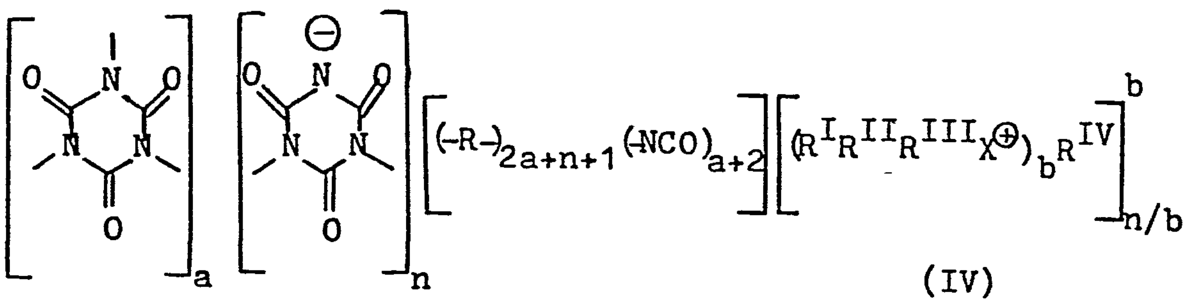

(IV)

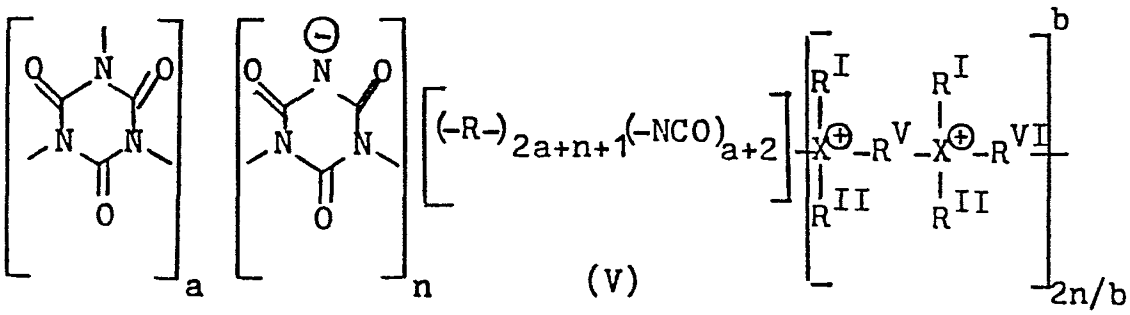

(V)

dans lesquelles R, X, $R^{I}$, $R^{II}$, $R^{III}$, $R^{IV}$, $R^{V}$, $R^{VI}$ , a, n et b ont les significations données plus haut.

Dans une forme de réalisation plus particulière

des nouveaux composés répondant aux formules (IV) et (V), R est, de préférence, un radical aromatique éventuellement substitué, tel qu'un radical tolyle, tandis que $R^{I}$, $R^{II}$, $R^{III}$, $R^{V}$, $R^{VI}$ et éventuellement $R^{IV}$ sont, de préférence, des radicaux alcoyle en $C_2$ à $C_{12}$.

L'invention concerne également, à titre de nouveaux composés, les sels organiques de polyisocyanates de formule (I), dont au moins une partie des cycles isocyanurates ioniques et/ou des fonctions isocyanates libres sont fonctionnalisées.

Les nouveaux composés suivant la présente invention sont utilisables dans la préparation de polyuréthannes, comme intermédiaires en synthèse chimique et dans la complexation d'ions métalliques (par exemple pour l'épuration d'effluents liquides polluants); par ailleurs, les composés suivant l'invention, répondant à l'une ou l'autre des formules I, IV et V, se prêtent à une fonctionnalisation aisée grâce à la présence de fonctions isocyanates libres et de cycles isocyanurates chargés et à leur solubilité dans les solvants organiques.

La présente invention est également relative à un procédé de préparation des nouveaux composés répondant aux formules (I), (IV) et (V).

Selon l'invention, on prépare ces nouveaux composés par réaction d'un cyanate d'onium de formule générale :

$$\left[(R^{I}\ R^{II}\ R^{III}\ X^{\oplus})_b\ R^{IV}\right]^{b}\quad (NCO^{\ominus})_b \qquad \text{(VI)}$$

ou de formule générale :

$$\left[\begin{matrix} R^{I} \\ | \\ -X^{\oplus} \\ | \\ R^{II} \end{matrix} - R^{V} - \begin{matrix} R^{I} \\ | \\ X^{\oplus} \\ | \\ R^{II} \end{matrix} - R^{VI} - \right]^{b}_{b/2} \quad \left[NCO^{\ominus}\right]_b \qquad \text{(VII)}$$

(cyanates de polyoniums quaternaires du type "ionène")

dans lesquelles X, $R^{I}$, $R^{II}$, $R^{III}$, $R^{IV}$, $R^{V}$, $R^{VI}$ et b ont les significations indiquées plus haut avec un composé choisi parmi les polyisocyanates organiques de formule générale :

$$R\ (NCO)_m \qquad (VIII)$$

dans laquelle R a les significations indiquées plus haut et m est égal ou supérieur à 2,
et les 1,3-bis(isocyanatoaryl)urétidinediones de formule générale :

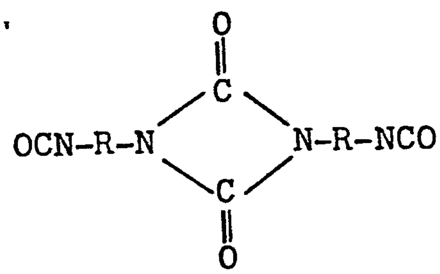

(IX)

dans laquelle R désigne un radical aryle.

Dans une forme de réalisation particulière du procédé suivant l'invention, on fait réagir à une température comprise entre -20°C et 100°C un cyanate d'ammonium, phosphonium ou arsonium tétrasubstitué avec 0,2 à 10 moles de diisocyanate organique par mole de cyanate d'onium en présence de 0,05 litre à 2 litres, par mole de diisocyanate, d'un solvant organique inerte pendant une durée de 0,5 minute à 48 heures.

Le polyisocyanate organique de formule (VIII) peut être un diisocyanate répondant à la formule suivante :

$$OCN\text{-}R\text{-}NCO \qquad (IX)$$

dans laquelle R désigne un radical bivalent aliphatique, cycloaliphatique, aromatique ou hétérocyclique éventuellement substitué ou un mélange de tels diisocyanates.

Comme exemples d'isocyanates utilisables dans le procédé suivant la présente invention, on peut citer

le diisocyanate de p-phénylène, le 2,4-diisocyanate de toluène (TDI), le 2,6-diisocyanate de toluène (TDI), le diisocyanate de méthylène di-p-phénylène (MDI) ou ses polymères (PAPI), le 1,5-diisocyanate de naphtylène, le 4,4'-diisocyanate de stilbène, le diisocyanate de m-xylylène, le diisocyanate d'isophorone, le diisocyanate d'hexaméthylène, le diisocyanate de 2,2,4-triméthylhexaméthylène, le 1,4-diisocyanate de butène ou leurs mélanges. On obtient les meilleurs résultats avec les diisocyanates aromatiques.

Comme exemples de 1,3-bis(isocyanatoaryl)urétidinediones utilisables dans le procédé suivant la présente invention, on peut citer les 1,3-bis(3-isocyanato-4-méthyl-phényl)urétidinedione et 1,3-bis(4-isocyanato-phényl)urétidinedione des formules respectives (X) et (XI) suivantes :

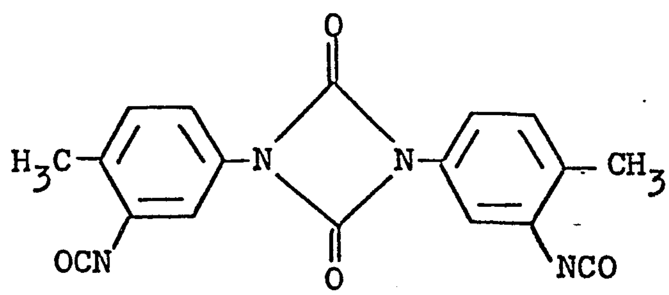
(X)

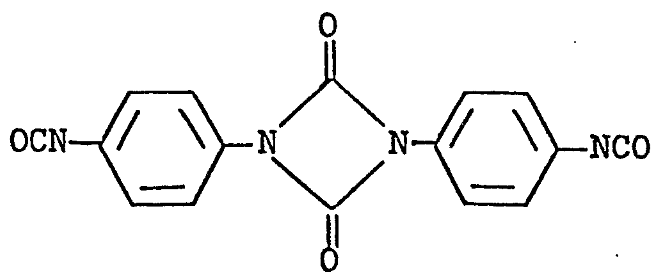
(XI)

Comme exemples de cyanates d'onium monovalents pouvant être utilisés dans le procédé suivant l'invention, on peut citer le cyanate de tétraméthylammonium, le cyanate de tétraéthylammonium, le cyanate de tétrapropylammonium, le cyanate de tétrabutylammonium, le cyanate de

tétraamylammonium, le cyanate de tétrahexylammonium, le cyanate de tributylméthylammonium, le cyanate de tricaprylméthylammonium, le cyanate de benzyltriméthylammonium, le cyanate de benzyltriéthylammonium, le cyanate de benzyltributylammonium, le cyanate de dodécyltriméthylammonium, le cyanate de benzylisopropyldiméthylammonium, le cyanate de benzyltripropylammonium, le cyanate de phényltriméthylammonium, le cyanate de phényltriéthylammonium, le cyanate de méthyltributylphosphonium, le cyanate de tétrabutylphosphonium, le cyanate de tétraphénylphosphonium, le cyanate de benzyltriéthylarsonium, le cyanate de tétrapropylarsonium, le cyanate de tétraphénylarsonium, le cyanate de diméthylpipéridinium, ainsi que le cyanate de méthylpyridinium.

Comme exemples de cyanates d'onium polyvalents utilisables dans le procédé suivant l'invention, on peut citer le cyanate de 1,4-bis(triméthylammonium)butane, le cyanate de 1,6-bis(triéthylammonium)hexane, le cyanate de 1,4-diméthyl-1,4 diaza-2,2,2 bicyclo-octane, les cyanates fixés sur une résine anionique du type AMBERLITE IRA 400 (FLUKA), l'ionène de formule :

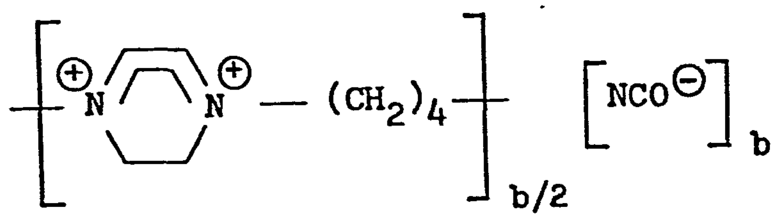

(XII)

et l'ionène de formule :

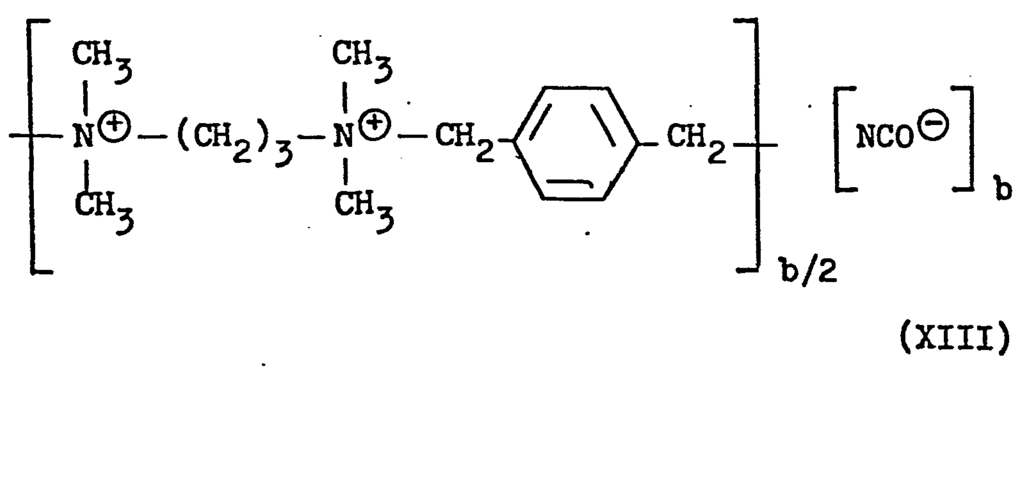

(XIII)

où b est compris entre 5 et 40,
ou leurs mélanges.

On peut également utiliser des mélanges des cyanates précités et des dérivés substitués de ces cyanates n'interférant pas dans la réaction.

Les cyanates d'onium peuvent éventuellement être produits dans le solvant réactionnel, avant ou pendant la préparation, par toute méthode connue.

Le procédé suivant l'invention peut être mis en oeuvre dans un solvant apolaire ou polaire, c'est-à-dire un solvant dont la constante diélectrique est inférieure ou supérieure à 15. Le procédé suivant l'invention peut facultativement être mis en oeuvre en l'absence de tout solvant.

Dans le procédé suivant la présente invention, les solvants utiles peuvent être polaires ou apolaires, pourvu qu'ils soient liquides à la température de la réaction et inertes vis-à-vis des réactifs dans les conditions de l'expérience; sont préférés les solvants dans lesquels les réactifs sont solubles dès le début ou après environ 5 minutes de réaction. Le terme "soluble" signifie que les réactifs sont solubles dans le solvant à raison de plus de 10 grammes par kg de solvant. De façon étonnante, la production des nouveaux composés de formule (I) de poids moléculaire élevé, contenant un grand nombre de cycles isocyanuriques ioniques et solubles dans le mélange réactionnel, se réalise le mieux dans des solvants dont la constante diélectrique à 25°C est inférieure à 15; il est toutefois possible d'utiliser des solvants de constante diélectrique plus élevée. Le choix du solvant est conditionné par la nature et les caractéristiques du produit recherché.

Comme solvants utilisables dans le procédé suivant la présente invention, on peut citer, par exemple, le tétrachlorure de carbone, le chloroforme, le

dichlorométhane, le 1,2-dichloréthane, le 1,1-dichloréthane, le 1,2-dichloréthylène, l'o-dichlorobenzène, le diméthoxyéthane, le dioxanne, l'acétate d'éthyle, le tétrahydrofuranne, le toluène, l'α-méthylnaphtalène, l'acétone, le diméthylformamide ou leurs mélanges.

La quantité de solvant par mole d'isocyanate peut être variable et de préférence comprise entre 0,05 et 2 litres de solvant par mole d'isocyanate.

Par ailleurs, la réaction du procédé suivant l'invention peut être éventuellement réalisée en présence d'un catalyseur. Comme catalyseurs, on peut utiliser des amines tertiaires, telles que la triéthylamine ou la triéthylènediamine, des sels d'acides carboxyliques, tels que l'acétate de potassium ou le benzoate de potassium ou des sels d'ammonium d'acides carboxyliques, tels que l'acétate de tétraéthylammonium ou le benzoate de tétraméthylammonium. Le catalyseur peut être introduit dans le mélange réactionnel dès le début ou au cours de la réaction de polymérisation, de préférence à des concentrations molaires inférieures à 2 ‰ de la concentration initiale.

Dans le procédé selon la présente invention, les réactifs peuvent être utilisés dans un rapport isocyanate/cyanate d'onium généralement quelconque; il est cependant avantageux que ce rapport soit compris entre 10 et 0,2 environ et, de préférence, entre 2,5 et 0,4 environ.

La température réactionnelle est normalement comprise entre -80°C et +150°C et, de préférence, entre -20°C et 100°C; en fait, le choix de la température sera fait en fonction de la réactivité de l'isocyanate, la présence éventuelle de catalyseurs et les caractéristiques recherchées du produit.

La pression n'a pas d'influence sur la production des sels organiques des polyisocyanates suivant la présente

invention; une pression différente de la pression atmosphérique ne sera utilisée que pour maintenir liquide le solvant, pour faciliter l'écoulement des fluides ou dans un autre but.

Le temps nécessaire pour la réaction dépend de la réactivité du système et des caractéristiques du produit recherché; dans certains cas, des temps de réaction d'une minute sont suffisants; de préférence, le temps de la réaction sera compris entre 0,5 minute et 48 heures.

Les polymères de formules (I), (IV) et (V) obtenus par le procédé suivant l'invention peuvent être isolés par évaporation ou distillation du solvant, par filtration, centrifugation ou extraction avec un solvant.

Le poids moléculaire des nouveaux polymères des formules (I), (IV) et (V) peut être supérieur à 100.000. Ces polymères sont solubles dans de nombreux solvants polaires ou apolaires jusqu'à des poids moléculaires de 100.000, ce qui facilite leur fonctionnalisation ultérieure. Les polymères suivant l'invention dissolvent des sels minéraux, par exemple, de cuivre, nickel, cobalt, bismuth, dans les solvants organiques où ils sont normalement insolubles.

De préférence, les polymères suivant l'invention ont un nombre de cycles isocyanurates ioniques supérieur au nombre de cycles isocyanurates moléculaires, c'est-à-dire que, dans la composition moyenne des composés de formules (I), (IV) et (V), n est supérieur à a.

Les nouveaux composés suivant l'invention sont aisément fonctionnalisables à l'aide de coréactifs qui réagissent avec les cycles isocyanurates ioniques, comme par exemple les acides, le sulfate de diméthyle, le chlorure d'allyle, le chlorure d'acétyle, les dichlorures de phtaloyle et/ou ceux qui réagissent avec les fonctions isocyanates libres du polymère, comme par exemple, les amines, les alcools et les acides. Cette fonctionnalisation peut être réalisée par réaction des nouveaux composés

suivant l'invention avec les coréactifs appropriés. Elle peut également être réalisée en introduisant le coréactif au cours de la préparation des composés suivant l'invention.

Les exemples suivants illustrent la préparation des nouveaux composés suivant l'invention et leur utilisation. Ces exemples ne sont pas limitatifs.

Dans ces exemples, la production des nouveaux sels organiques de polyisocyanates suivant l'invention et les applications auxquelles ils peuvent conduire, ont été réalisées en discontinu dans des réacteurs du type Grignard; il est évident que des réacteurs opérant en continu peuvent aussi être utilisés.

La composition moyenne des sels organiques de polyisocyanates suivant l'invention, c'est-à-dire les coefficients moyens a, b et n de la formule globale (I) sont déterminés à partir des mesures de nombre de fonctions isocyanate dans le polymère (titrage amine-équivalente et infrarouge), de la quantité de cyanate salin non transformé (I.R. et titrage potentiométrique), du nombre de cycles isocyanurates ioniques formés (titrage potentiométrique, I.R., RMN$^{13}$C) et du nombre de cycles isocyanuriques non-ioniques produits (I.R., RMN$^{13}$C); en fait, deux de ces mesures sont suffisantes pour déterminer les paramètres a et n; les autres ont pour objectif de confirmer la composition. Il est certain que, comme dans toute production de polymères, les valeurs moyennes résultent de la présence de polymères de composition différente dans le mélange.

L'appareil utilisé dans tous les exemples est un réacteur en verre de 0,5 l muni de quatre ouvertures, équipé d'un agitateur mécanique, d'un condenseur à reflux, d'un thermomètre et d'un dispositif permettant l'introduction d'un liquide; la température est réglée à l'aide d'un thermostat et le réacteur est maintenu sous une atmosphère de gaz inerte (azote ou argon).

EXEMPLE 1

On introduit dans le réacteur 11,4 g de cyanate de tétrapropylammonium (0,05 mole) et 250 ml de dichlorométhane anhydre; après dissolution du réactif, on ajoute au mélange, sous agitation et à 25°C, 17,4 g de 2,4-tolylène diisocyanate (0,1 mole); une réaction très rapide a lieu qui conduit, après 1 minute, à la disparition totale du cyanate d'onium utilisé et du tolylène diisocyanate; le produit obtenu, soluble dans le solvant, a la structure suivante (XIV) :

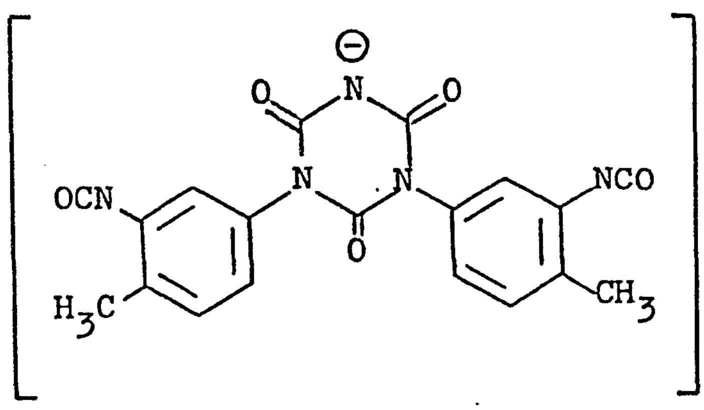

$(C_3H_7)_4\ N^{\oplus}$ (XIV)

Il peut être isolé par distillation sous vide du solvant, immédiatement après la réaction; on isole ainsi 27,1 g correspondant à un randement de 94 %.

EXEMPLE 2

On introduit dans le réacteur 17 g de cyanate de tétraamylammonium (0,05 mole) et 250 ml de diméthoxyéthane anhydre; le sel d'onium n'est que partiellement soluble dans ce solvant; on ajoute, sous agitation à 25°C, 17,1 g de 2,4-tolylène diisocyanate (0,1 mole); l'addition du 2,4-tolylène diisocyanate entraîne la dissolution du cyanate d'onium; après 10 minutes de réaction, le précipité formé est filtré, lavé à l'éther et séché; on obtient 33 g de produit, représentant un rendement de 97 %. Ce produit est soluble dans le dichlorométhane ou le chloroforme. Il

a été soumis à l'analyse chimique, à la spectrophotométrie I.R. et à la résonance magnétique nucléaire du $^{13}C$.

Les résultats indiquent que le produit est un mélange de 85 % en poids de (XV) :

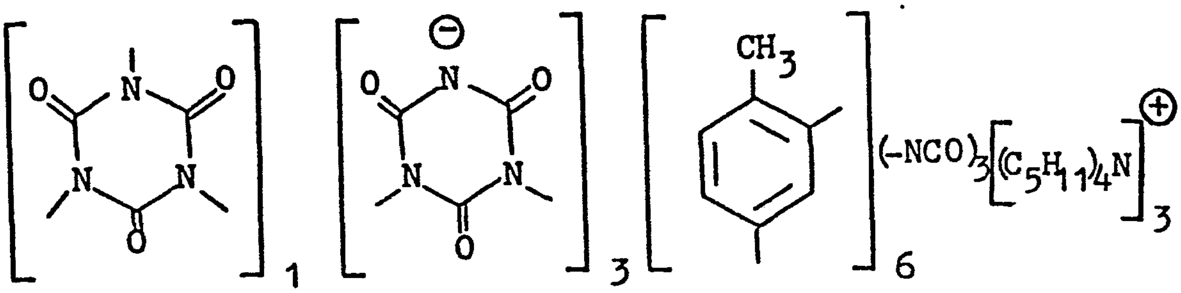

(XV)

et de 15 % de polymères supérieurs.

L'analyse thermique différentielle du produit présente une première vague endothermique vers 240°C et une seconde centrée sur 280°C.

EXEMPLE 3

On introduit dans le réacteur 22,8 g de cyanate de tétrapropylammonium (0,1 mole) et 250 ml de dichlorométhane anhydre; après dissolution, on introduit sous agitation, à 25°C, 17,4 g (0,1 mole) de 2,4-tolylène diisocyanate. Après 3 heures de réaction, à 25°C, le polymère, soluble dans le solvant, a la composition moyenne suivante :

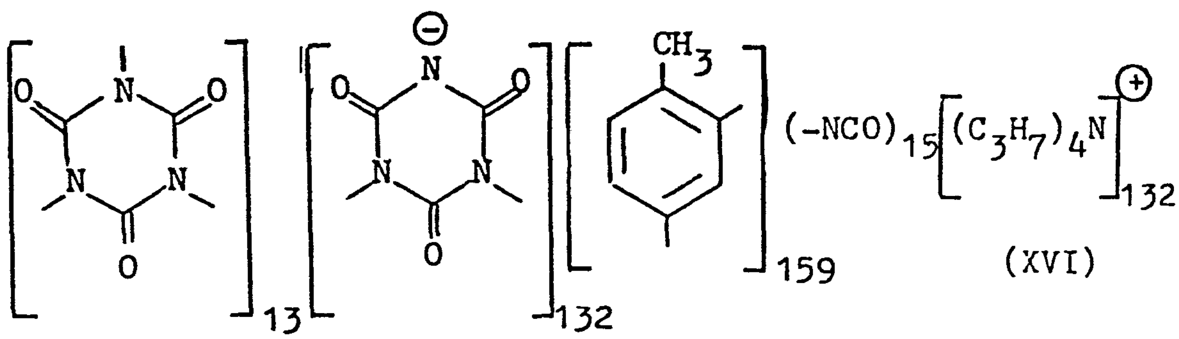

(XVI)

Son poids moléculaire est supérieur à 50.000.

La poursuite de la polymérisation conduit à la gélification du produit après 6 heures de réaction.

EXEMPLE 4

La réaction est conduite comme dans l'exemple 3, mais en employant 0,1 mole de cyanate de tétraamylammonium. La réaction est plus lente et conduit, après 24 heures de réaction, à un polymère soluble dont la composition moyenne est :

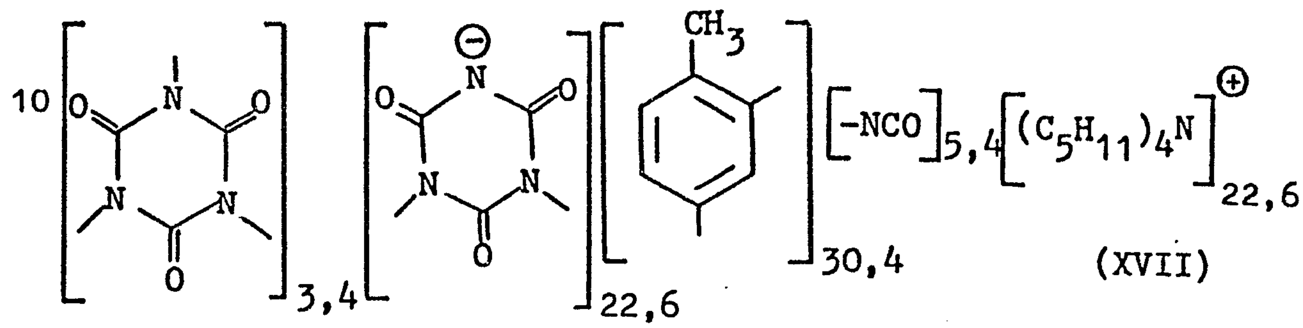

(XVII)

EXEMPLE 5

La réaction est conduite comme dans l'exemple 3, mais en utilisant de l'acétone comme solvant; dans ce solvant polaire, de constante diélectrique supérieure à 15, la gélification du produit est très rapide puisqu'elle se produit après 4 minutes de réaction et réduit les possibilités de fonctionnalisation du produit.

EXEMPLE 6

On introduit dans le réacteur 27,8 g de cyanate de tétrapropylammonium et 250 ml de dichlorométhane anhydre; après dissolution du réactif, on ajoute au mélange, sous agitation à 25°C, 34,8 g de 1,3-bis(3-isocyanato-4-méthylphényl)urétidinedione; après 20 minutes de réaction, le solvant est évaporé sous vide; on isole ainsi 56,5 g du composé de formule (XIV) de l'exemple 1 (rendement 98 ‰).

EXEMPLE 7

On introduit dans le réacteur 42,5 g de cyanate de tétraphénylarsonium (0,1 mole) et 250 ml de dichlorométhane anhydre; après dissolution, on introduit sous

agitation à 25°C, 17,4 g de 2,4-tolylène diisocyanate (0,1 mole). Après 2 heures de réaction, à 25°C, on isole le polymère insoluble (24,1 g). Il est caractérisé par la présence de 0,8 milliéquivalent de cycles chargés par g de polymère.

EXEMPLE 8

On introduit dans le réacteur 30,1 g de cyanate de tétrabutylphosphonium (0,1 mole) et 250 ml de dichlorométhane anhydre; après dissolution, on ajoute sous agitation à 30°C, 17,4 g de mélange 80:20 de TDI (0,1 mole); après 400 minutes de réaction, à 30°C, le polymère est isolé. On récupère 39 g de polymère de poids moléculaire moyen 5200 et contenant par molécule 5,8 cycles isocyanurates ioniques.

EXEMPLE 9

Un cyanate de polyammonium quaternaire est préparé à partir de 100 g de résine échangeuse d'anions du type Amberlite-IRA 400 sous sa forme $Cl^-$. L'échange entre les anions $Cl^-$ et $NCO^-$ est réalisé en faisant passer sur la résine une solution saturée de cyanate de sodium.

Après lavage au méthanol et à l'acétone, on obtient la résine anhydre sous sa forme $NCO^-$; elle contient 0,067 équivalent d'ions $NCO^-$ par gramme de résine.

On introduit la résine dans le réacteur et 100 ml de dichlorométhane anhydre; à cette suspension, on ajoute, sous agitation à 25°C, 0,67 mole de 2,4-toluène diisocyanate. Le mélange agité est maintenu à reflux pendant 5 heures; après évaporation du solvant, on récupère 209 g de solide constitué d'un copolymère de la résine de base et de polyisocyanurate partiellement chargé.

EXEMPLES 10 à 28

Le tableau I suivant résume les résultats obtenus dans des conditions variées. On y indique les concentrations initiales en réactifs (colonnes 2 et 3), la température et le temps de réaction (colonnes 4 et 5), le solvant (colonne 6) utilisé ainsi que le poids moléculaire du produit et sa teneur en cycles isocyanuriques ioniques exprimée en milliéquivalents par gramme (colonnes 7 et 8).

TABLEAU I

| 1 | 2 | 3 | 4 | 5 | 6 | 7 | 8 |
|---|---|---|---|---|---|---|---|
| N° Ex. | $C_{TDI}$ mole/l | $C_{QNCO}$* mole/l | T°C | t min | S** | PM | milli-éq./g |
| 10 | 0,3 | 0,3(1) | 25 | 360 | $CH_2Cl_2$ | 110.000 | 2,28 |
| 11 | 0,3 | 0,3(2) | 25 | 600 | " | 33.000 | 1,82 |
| 12 | 0,3 | 0,3(3) | 25 | 150 | " | 14.000 | 2,10 |
| 13 | 0,3 | 0,3(4) | 25 | 400 | " | 4.000 | 1,75 |
| 14 | 0,3 | 0,3(5) | 50 | 3 | " | 8.000 | 0,90 |
| 15 | 0,3 | 0,5(4) | 25 | 800 | " | 13.000 | 1,75 |
| 16 | 0,3 | 0,15(4) | 25 | 2 | " | 1.040 | 1,38 |
| 17 | 0,4 | 0,4(1) | 50 | 60 | " | 45.000 | 1,95 |
| 18 | 0,4 | 0,2(2) | 0 | 5 | " | 928 | 1,60 |
| 19 | 0,3 | 0,3(2) | 25 | 2 | " | 1.460 | 1,55 |
| 20 | " | " | " | 20 | " | 2.620 | 1,70 |
| 21 | " | " | " | 40 | " | 3.360 | 1,74 |
| 22 | " | " | " | 200 | " | 8.750 | 1,84 |
| 23 | " | " | " | 260 | " | 17.500 | 1,87 |
| 24 | 0,35 | 0,35(1) | 25 | 100 | DMF | 20.000 | 2,13 |
| 25 | " | " | 35 | 200 | 1,2DCE | 11.000 | 1,80 |
| 26 | " | 0,35(2) | 25 | 250 | 1,1DCE | 15.000 | 1,60 |
| 27 | 0,2 | 0,1(3) | 20 | 10 | acétate d'éthyle | 1.300 | 1,48 |
| 28 | nbre mole TDI | nbre mole QNCO(2) | | | | | |
| | 1 | 0,5 | 20 | 10 | - | 6.200 | 0,75 |

* Q(1) = $(C_3H_7)_4N^+$; (2) = $(C_4H_9)_4N^+$; (3) = $C_6H_5CH_2N^+(C_2H_5)_3$; (4) = $(C_5H_{11})_4N^+$; (5) = $(C_2H_5)_4N^+$

** DMF = diméthylformamide; 1,2 DCE = 1,2-dichloréthane; 1,1 DCE = 1,1-dichloréthane.

EXEMPLE 29

Le produit de formule (XII) (0,05 mole), préparé comme dans l'exemple 1, est mis en présence de triéthanolamine (0,05 mole) dans 0,25 l de dichlorométhane, à 25°C; la réaction est poursuivie pendant 1 heure; après ce temps, plus de 98 % des fonctions isocyanates présentes initialement ont disparu. Après distillation sous vide, on obtient 30,3 g de solide (85 % de rendement); l'analyse chimique, par spectrophotométrie I.R. et résonnance magnétique nucléaire, montre que le produit est un polymère contenant des fonctions isocyanurates ioniques et des liens uréthane

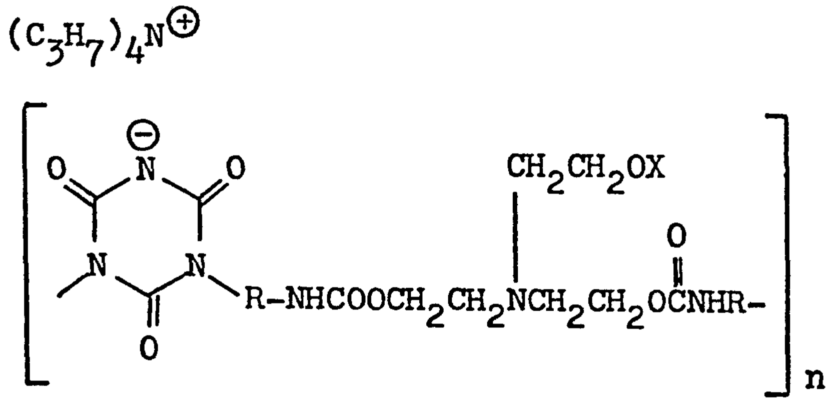

(XVIII)

où R est le radical 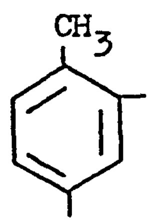 et X soit H, soit une nouvelle chaîne polymérique.

Par kg, le polymère renferme 1,36 équivalents de fonctions isocyanurate ionique et 1,13 équivalents de fonction amine tertiaire. Le polymère est insoluble dans l'eau; il est soluble dans l'acétonitrile, le N,N-diméthylformamide et le méthanol.

EXEMPLE 30

La réaction de polymérisation est conduite comme dans l'exemple 3; après 3 heures de polymérisation,

on introduit, sous agitation, 1,13 g de $NiCl_2$, sel insoluble dans le dichlorométhane; après 5 minutes, la totalité du sel introduit s'est solubilisée; après 30 minutes, un précipité se forme; après filtration, lavage à l'éther et séchage, on obtient 35,2 g de solide.

Ce solide est un polymère contenant la totalité du nickel introduit et de composition suivante :

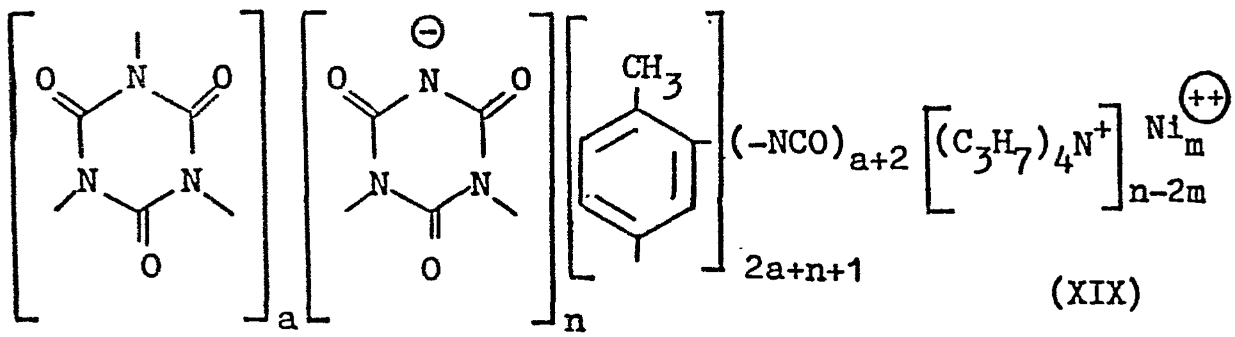

(XIX)

où $a > 13$, $n > 100$ et $m > 0$

EXEMPLE 31

La réaction est conduite comme dans l'exemple 3; après 5 heures de réaction, on ajoute 100 g d'un polymère de PM 3.500, résultant de la réaction de la glycérine avec l'oxyde de propylène et l'oxyde d'éthylène (Tercarol 305 de la Société CARBOCHIMIQUE dont l'indice d'hydroxyle est 48). Le polymère obtenu renferme des fonctions isocyanurate moléculaire, isocyanurate ionique et uréthanes. Il est soluble dans le dichlorométhane et dans l'eau.

EXEMPLE 32

La réaction est conduite comme dans l'exemple 3; après 5 heures de réaction, on ajoute 6,5 g de chlorure d'allyle. Le mélange réactionnel est maintenu à reflux pendant 10 heures; après distillation du solvant et lavage du solide obtenu à l'eau, on obtient 32,5 g d'un

polymère dans lequel 45 % des cycles isocyanuriques ioniques présents dans le polymère initial ont été convertis en allylisocyanurates.

EXEMPLES 33 à 42

Le tableau II suivant résume les résultats obtenus dans des conditions variées par réaction du TDI avec du cyanate d'onium (QNCO) en présence d'un agent d'alkylation (RX).

Le cyanate d'onium est ajouté progressivement, soit sous forme solide, soit en solution dans un solvant organique dont la nature est précisée dans le tableau II, à la solution renfermant le TDI, l'agent d'alkylation et le solvant éventuel.

Les polymères obtenus sont moléculaires et renferment des cycles isocyanuriques asymétriques et, éventuellement, des cycles isocyanuriques symétriques.

Dans ce tableau, on y indique le nombre initial de moles des réactifs (colonnes 2, 3 et 4), la température (colonne 5), le temps de réaction (colonne 6), le volume de solvant (colonne 7) utilisé, ainsi que les teneurs (exprimées en moles) en isocyanate (colonne 8), en TDI après réaction ($TDI_t$) (colonne 9), en cycle isocyanurique asymétrique (IA) (colonne 10) et en isocyanate de méthyle (colonne 11) dans le mélange réactionnel final.

TABLEAU II

| 1 | 2 | 3 | 4 | 5 | 6 | 7 | 8 | 9 | 10 | 11 |
|---|---|---|---|---|---|---|---|---|---|---|
| N° ex. | TDI (moles) | QNCO* (moles) | RX** (moles) | T (°C) | t (min) | S*** (ml) | Equivalents de fonctions isocyanates | $TDI_t$ (moles) | IA (moles) | $CH_3NCO$ (moles) |
| 33 | 0,382 | 0,198(1)(9) | 0,192(4) | 25 | 5 | 50(6) | 0,422 | 0,026 | 0,178 | 0,014 |
| 34 | 4,268 | 2,134(1)(9) | 2,134(4) | 25 | 5 | 500(6) | 5,04 | 0,458 | 1,86 | 0,274 |
| 35 | 0,853 | 0,427(1)(9) | 0,427(4) | 25 | 5 | 80(6) | 0,928 | 0,050 | 0,402 | 0,025 |
| 36 | 0,853 | 0,427(2)(9) | 0,427(4) | 40 | 5 | 80(6) | 0,935 | 0,047 | 0,409 | 0,023 |
| 37 | 0,840 | 0,420(3)(9) | 0,420(4) | 25 | 5 | 80(6) | 0,900 | 0,030 | 0,412 | 0,015 |
| 38 | 0,854 | 0,427(1)(7) | 0,427(4) | 25 | 5 | 100(7) | 0,947 | 0,062 | 0,396 | 0,031 |
| 39 | 0,850 | 0,425(2)(7) | 0,425(4) | 30 | 5 | 100(7) | 0,940 | 0,056 | 0,400 | 0,028 |
| 40 | 0,850 | 0,425(1)(8) | 0,425(5) | 30 | 5 | 100(8) | 0,930 | 0,041 | 0,400 | 0,021 |
| 41 | 8,000 | 0,636(1)(9) | 0,636(4) | 30 | 5 | - | 14,800 | 6,770 | 0,610 | 0,026 |
| 42 | 8,000 | 0,640(1)(9) | 0,640(4) | 30 | 5 | - | 14,700 | 6,720 | 0,620 | 0,020 |

*Q : (1) triéthylbenzylammonium, (2) tributylbenzylammonium, (3) tétrapropylammonium, (9) addition du QNCO sous forme solide. La nature du solvant dans lequel le QNCO est éventuellement dissous à saturation est précisée par le deuxième chiffre entre parenthèses de la colonne 3.

**RX : (4) diméthylsulfate, (5) iodure de méthyle.

***S : (6) éthylméthylcétone (butanone-2), (7) dichlorométhane, (8) acétonitrile.

EXEMPLE 43

La réaction est conduite comme dans l'exemple 34; après 5 minutes de réaction, on distille sous vide une partie du solvant (butanone-2) et l'isocyanate de méthyle. Le nombre de moles de fonction isocyanate restant dans le mélange réactionnel après l'opération de distillation est de 4,186 moles.

On introduit alors le mélange réactionnel dans un ballon de 4 litres muni de quatre ouvertures équipé d'un agitateur mécanique, d'un condensateur à reflux, d'un thermomètre et d'un dispositif permettant l'introduction de liquide. La température est maintenue à 25°C. Ce mélange réactionnel est mis en présence de 0,698 mole de triméthylolpropane de formule (XX) en solution dans 2 litres de butanone-2.

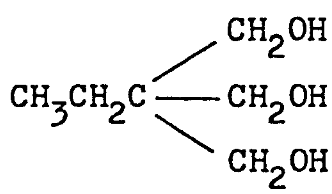

(XX)

La réaction est poursuivie pendant 5 heures; après ce temps, plus de 98 % des fonctions hydroxyle, présentes initialement, ont disparu.

Le polymère ainsi formé est entièrement soluble dans la butanone-2 jusqu'à des teneurs de 70 % en poids.

EXEMPLE 44

On ajoute progressivement 0,5 équivalent de cyanate de triéthylbenzylammonium sous forme solide à une solution contenant 10 équivalents de MDI ("Tercarate B01" de la société CARBOCHIMIQUE, présentant une teneur en fonctions isocyanate de 31,5 % en poids) et 0,5 équivalent de diméthylsulfate. On obtient un produit de réaction renfermant 0,5 mole de cycles isocyanurates moléculaires. Cette solution a été utilisée dans la préparation d'une mousse de polyuréthane rigide ayant une densité de 35 $kg/m^3$.

# R E V E N D I C A T I O N S

1. A titre de nouveaux composés, les sels organiques de polyisocyanates contenant au moins un cycle isocyanurate à charge négative et au moins un ion non métallique à charge positive, ces nouveaux sels répondant à la formule générale (I) suivante :

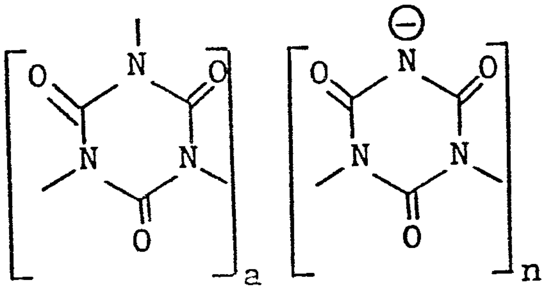 $\left[(-R-)_{2a+n+1}(-NCO)_{a+2}\right]\left[Q^{b\oplus}\right]_{n/b}$

(I)

dans laquelle R est un radical bivalent aliphatique, cycloaliphatique, aromatique ou hétérocyclique éventuellement substitué, Q est un cation onium tétrasubstitué par quatre radicaux identiques ou différents pouvant être des radicaux aliphatiques, cycloaliphatiques, aromatiques ou hétérocycliques éventuellement substitués, a est le nombre moyen de cycles isocyanurates moléculaires qui peut être égal ou supérieur à zéro, b est le nombre d'hétéroatomes tétrasubstitués de Q qui est d'au moins 1 et n est le nombre moyen de cycles isocyanurates ioniques qui est d'au moins 1.

2. Composés suivant la revendication 1, caractérisés en ce que, dans la formule (I), Q désigne un radical de formule

$$(R^{I}\ R^{II}\ R^{III}\ X)_b\ R^{IV} \qquad \text{(II)}$$

dans laquelle X est de l'azote, du phosphore ou de l'arsenic, $R^{I}$, $R^{II}$, $R^{III}$ et $R^{IV}$ qui sont identiques ou différents désignent des radicaux alcoyle, aryle ou arylalcoyle éventuellement substitués, $R^{I}$ et $R^{II}$ pouvant

également former ensemble un radical bivalent éventuellement substitué et b a la signification donnée plus haut.

3. Composés suivant la revendication 1, caractérisés en ce que, dans la formule (I), Q désigne un radical de formule :

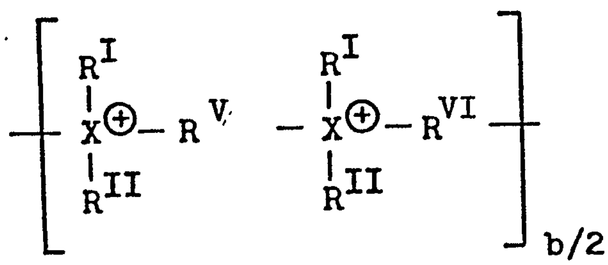

(III)

dans laquelle X, $R^{I}$ et $R^{II}$ ont les significations données ci-dessus, $R^{V}$ et $R^{VI}$ sont des radicaux bivalents et b a la signification donnée plus haut.

4. Composés suivant l'une ou l'autre des revendications 2 et 3, caractérisés en ce que, dans la formule (I), R désigne un radical aromatique éventuellement substitué, tandis que $R^{I}$, $R^{II}$, $R^{III}$, $R^{V}$, $R^{VI}$ et éventuellement $R^{IV}$ sont des radicaux alcoyle en $C_1$ à $C_{30}$.

5. Composés suivant la revendication 4, caractérisés en ce que, dans la formule (I), $R^{I}$, $R^{II}$, $R^{III}$, $R^{V}$, $R^{VI}$ et éventuellement $R^{IV}$ désignent des radicaux alcoyle en $C_2$ à $C_{12}$.

6. A titre de nouveaux composés, les sels organiques de polyisocyanates suivant l'une quelconque des revendications précédentes, dont au moins une partie des cycles isocyanurates ioniques et/ou des fonctions isocyanates libres sont fonctionnalisées.

7. Procédé de préparation d'un sel organique de polyisocyanate contenant au moins un cycle isocyanurate à charge négative et au moins un ion non métallique à charge positive suivant l'une quelconque des revendications 1 à 5, caractérisé en ce qu'on fait réagir un cyanate d'onium de formule générale :

$$\left[(R^{I}\ R^{II}\ R^{III}\ X)_{b}\ R^{IV}\right]^{b\oplus}\ (NCO^{\ominus})_{b} \qquad (VI)$$

ou de formule générale :

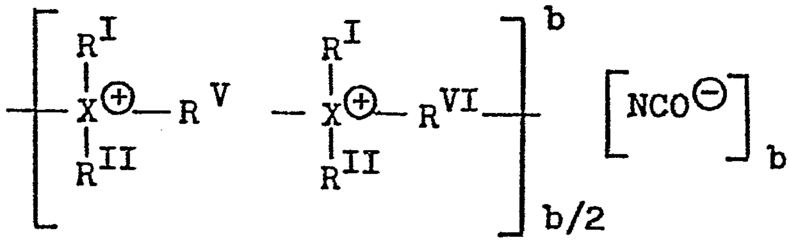

(VII)

dans lesquelles X, $R^{I}$, $R^{II}$, $R^{III}$, $R^{IV}$, $R^{V}$ et $R^{VI}$ ont les significations indiquées plus haut avec un composé choisi parmi les polyisocyanates organiques de formule générale :

$$R\ (NCO)_{m} \qquad (VIII)$$

dans laquelle R a les significations indiquées plus haut et m est égal ou supérieur à 2,
et les 1,3-bis(isocyanatoaryl)urétidinediones de formule générale :

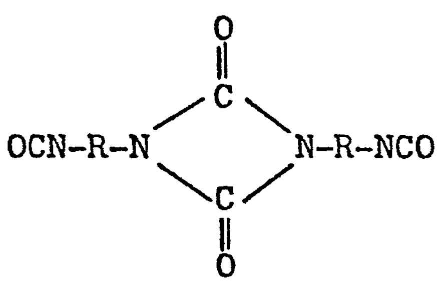

(IX)

dans laquelle R désigne un radical aryle.

8. Procédé suivant la revendication 7, caractérisé en ce qu'on fait réagir à une température comprise entre -20°C et 100°C un cyanate d'ammonium, phosphonium ou arsonium tétrasubstitué avec 0,2 à 10 moles

de diisocyanate organique par mole de cyanate d'onium en présence de 0,05 litre à 2 litres, par mole de diisocyanate, d'un solvant organique inerte, pendant une durée de 0,5 minute à 48 heures.

9. Procédé suivant l'une quelconque des revendications 7 et 8, caractérisé en ce qu'on utilise, comme cyanate d'onium tétrasubstitué, un cyanate d'ammonium tétrasubstitué répondant à la formule générale

$$(R^{I}\ R^{II}\ R^{III}\ R^{IV})\ N\ NCO$$

dans laquelle $R^{I}$, $R^{II}$, $R^{III}$, $R^{IV}$ qui sont identiques ou différents désignent des radicaux aliphatiques, cycloaliphatiques, aromatiques ou hétérocycliques substitués ou non ou dans laquelle $R^{I}$ et $R^{II}$ représentent ensemble un radical bivalent substitué ou non.

10. Procédé suivant l'une quelconque des revendications 7 et 8, caractérisé en ce qu'on utilise, comme cyanate d'onium tétrasubstitué, un cyanate de phosphonium tétrasubstitué répondant à la formule générale

$$(R^{I}\ R^{II}\ R^{III}\ R^{IV})\ P\ NCO$$

dans laquelle $R^{I}$, $R^{II}$, $R^{III}$, $R^{IV}$ qui sont identiques ou différents désignent des radicaux aliphatiques, cycloaliphatiques, aromatiques ou hétérocycliques substitués ou non ou dans laquelle $R^{I}$ et $R^{II}$ représentent ensemble un radical bivalent substitué ou non.

11. Procédé suivant l'une quelconque des revendications 7 et 8, caractérisé en ce qu'on utilise, comme cyanate d'onium tétrasubstitué, un cyanate d'arsonium tétrasubstitué répondant à la formule générale

$$(R^{I}\ R^{II}\ R^{III}\ R^{IV})\ As\ NCO$$

dans laquelle $R^{I}$, $R^{II}$, $R^{III}$, $R^{IV}$ qui sont identiques ou différents, désignent des radicaux aliphatiques, cycloaliphatiques, aromatiques ou hétérocycliques substitués ou non ou dans laquelle $R^{I}$ et $R^{II}$ représentent ensemble un radical bivalent substitué ou non.

12. Procédé suivant l'une quelconque des revendications 7 à 11, caractérisé en ce qu'on utilise un diisocyanate organique répondant à la formule générale

OCN-R-NCO

où R désigne un radical bivalent aliphatique, cycloaliphatique, aromatique, hétérocyclique substitué ou non.

13. Procédé suivant l'une quelconque des revendications 7 à 11, caractérisé en ce qu'on utilise un diisocyanate organique choisi parmi le 2,4-tolylène diisocyanate, le 2,6-tolylène diisocyanate ou leurs mélanges.

14. Procédé suivant l'une quelconque des revendications 7 à 11, caractérisé en ce qu'on utilise un diisocyanate organique constitué par la 1,3-bis(3-isocyanate-4-méthyl-phényl)urétidinedione.

15. Procédé suivant l'une quelconque des revendications 7 à 14, caractérisé en ce qu'on utilise, comme réactif, un mélange de diisocyanates organiques de formule générale

OCN-R-NCO

dans laquelle R a les significations indiquées plus haut.

16. Procédé suivant l'une quelconque des revendications 8 à 15, caractérisé en ce qu'on utilise un solvant qui dissout au moins 10 g de cyanate d'onium par kg de solvant à la température de la réaction.

17. Procédé suivant l'une quelconque des revendications 8 à 15, caractérisé en ce qu'on utilise un solvant dans lequel les réactifs dans leur totalité sont dissous après environ 5 minutes de réaction.

18. Procédé suivant l'une quelconque des revendications 8 à 15, caractérisé en ce qu'on utilise un solvant dont la constante diélectrique à 25°C est inférieure à 15.

19. Procédé suivant l'une quelconque des revendications 8 à 17, caractérisé en ce qu'on utilise un solvant choisi parmi le dichlorométhane, le 1,2-dichloréthane, le chloroforme, le trichloréthylène, le 1,1-dichloréthylène, le diméthyléther, le diméthoxyéthane, l'acétate de méthyle, le tétrahydrofuranne, l'acétate d'éthyle, le dioxanne, le diéthyléther, la pyridine, l'o-dichlorobenzène, le chlorobenzène, le benzène, le toluène, les xylènes, l'α-méthylnaphtalène, l'acétate de butyle, le diisopropyléther, le diméthylformamide et le diphényléther.

20. Procédé suivant l'une quelconque des revendications 7 à 18, caractérisé en ce qu'on effectue la réaction en présence d'un catalyseur.

21. Procédé suivant la revendication 20, caractérisé en ce que le catalyseur est choisi parmi les amines tertiaires, les sels de métaux d'acides carboxyliques et les sels d'ammonium tétrasubstitués d'acides carboxyliques.

22. Procédé suivant l'une quelconque des revendications 7 à 21, caractérisé en ce qu'on utilise, comme cyanate d'onium, un cyanate choisi parmi le cyanate de tétraméthylammonium, le cyanate de tétraéthylammonium, le cyanate de tétrapropylammonium, le cyanate de tétrabutylammonium, le cyanate de tétraamylammonium, le cyanate de tétrahexylammonium, le cyanate de tributylméthylammonium, le cyanate de tricaprylméthylammonium, le cyanate de benzyltriméthylammonium, le cyanate de benzyltriéthylammonium, le cyanate de benzyltributylammonium, le cyanate de dodécyltriméthylammonium, le cyanate de benzylisopropyldiméthylammonium, le cyanate

de benzyltripropylammonium, le cyanate de phényltriméthylammonium, le cyanate de phényltriéthylammonium, le cyanate de méthyltributylphosphonium, le cyanate de tétrabutylphosphonium, le cyanate de tétraphénylphosphonium, le cyanate de benzyltriéthylarsonium, le cyanate de tétrapropylarsonium, le cyanate de tétraphénylarsonium, le cyanate de diméthylpipéridinium, le cyanate de méthylpyridinium, ou un mélange d'au moins deux d'entre eux.

23. Procédé suivant l'une quelconque des revendications 7 à 21, caractérisé en ce qu'on utilise, comme cyanate d'onium, le cyanate de 1,4-bis(triméthylammonium)butane, le cyanate de 1,6-bis(triéthylammonium)-hexane, le cyanate de 1,4-diméthyl-1,4-diaza-2,2,2 bicyclo-octane, les cyanates fixés sur une résine anionique du type AMBERLITE IRA 400 (FLUKA), l'ionène de formule :

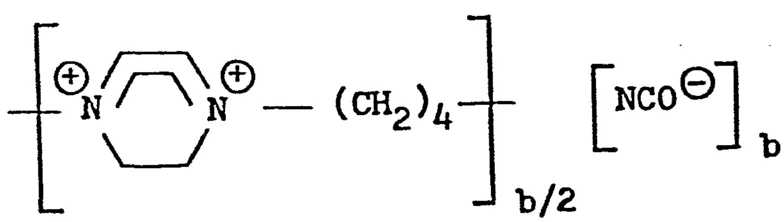

(XII)

et l'ionène de formule :

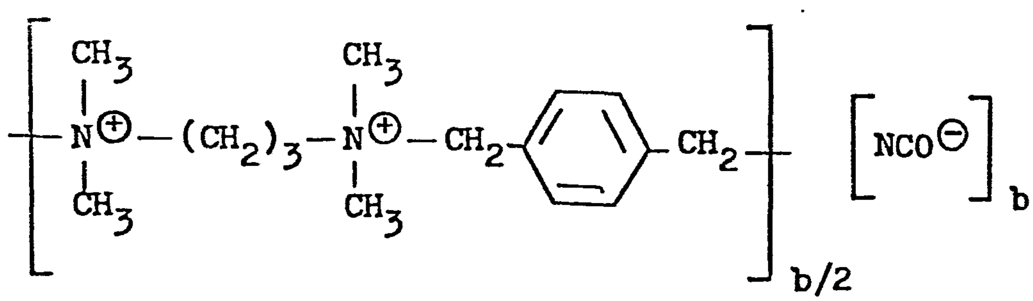

(XIII)

où b est compris entre 5 et 40,
ou un mélange d'au moins deux d'entre eux.

24. Procédé suivant l'une quelconque des revendications 7 à 21, caractérisé en ce qu'on utilise comme 1,3-bis(isocyanatoaryl)urétidinedione, de la 1,3-bis(3-isocyanato-4-méthyl-phényl)urétidinedione ou de la 1,3-bis(4-isocyanatophényl)urétidinedione.

25. Sels organiques de polyisocyanates contenant au moins un cycle isocyanurate à charge négative et au moins un ion non métallique à charge positive, préparés par le procédé suivant l'une quelconque des revendications 7 à 24.

26. Procédé de préparation d'un composé suivant la revendication 6, caractérisé en ce qu'on fait réagir un composé suivant l'une quelconque des revendications 1 à 5 avec un coréactif capable de fonctionnaliser au moins une partie des cycles isocyanurates ioniques et/ou des fonctions isocyanates libres ou on applique le procédé suivant l'une quelconque des revendications 7 à 24 en présence d'un coréactif capable de fonctionnaliser au moins une partie des cycles isocyanurates ioniques et/ou des fonctions isocyanates libres.

27. Procédé suivant la revendication 25, caractérisé en ce qu'on utilise un agent d'alkylation ou un alcool comme coréactif.

Office européen des brevets

# RAPPORT DE RECHERCHE EUROPEENNE

0098004
Numéro de la demande

EP 83 20 0904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 039 485 (P.A. ARGABRIGHT et al.) * Colonne 1, ligne 64 - colonne 2, ligne 36; exemple 1 * | 1-9,12,13,16-19,22,25 | C 08 G 18/02<br>C 08 G 18/79 |
| | --- | | |
| D,A | US-A-3 573 259 (P.A. ARGABRIGHT et al.) * Colonne 2, ligne 45 - colonne 5, ligne 42 * | 7,8,12,13,15-20 | |
| | --- | | |
| A | US-A-4 006 098 (P.A. ARGABRIGHT et al.) * Colonne 1, ligne 25 - colonne 7, ligne 26 * | 1,26,27 | |
| | ----- | | |

DOMAINES TECHNIQUES RECHERCHES (Int. Cl. ³)

C 07 D 251/34
C 08 G 18/00

Le présent rapport de recherche a été établi pour toutes les revendications

| Lieu de la recherche | Date d'achèvement de la recherche | Examinateur |
|---|---|---|
| BERLIN | 19-09-1983 | IDEZ C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82